# EUROPEAN PATENT APPLICATION

(11) **EP 3 543 620 A1**
(43) Date of publication of application: **25.09.2019**
(21) Application number: 18778234.7
(22) Date of filing: 07.03.2018
(51) Int. Cl.: F24F 13/22, F16L 3/08

(54) **DRAIN HOSE FASTENER, AND INDOOR UNIT FOR AIR CONDITIONING DEVICE**

(30) Priority: 31.03.2017 JP 2017070985
(71) Applicant: Mitsubishi Heavy Industries Thermal Systems, Ltd., Tokyo 108-8215 (JP)
(72) Inventor: UNO, Naomichi, Tokyo 108-8215 (JP)
(74) Representative: Henkel, Breuer & Partner
(86) International application number: PCT/JP2018/008863
(87) International publication number: WO 2018/180322

(57) **Abstract**

Provided is a clip (10) for fastening a drain hose inserted in a drain socket provided in a drain pan. The clip (10) is provided with: a body (15) having formed therein a drain hose insertion hole (14) into which the drain hose is inserted; and a fastening section (17) connected to the body (15) and having formed therein a screw passage hole (16) through which a screw fastened to the screw fastening boss of the drain pan is passed. The fastening section (17) is provided with a positioning rib (19a) which rises from a reference surface (P), and also with a flat section (21) which is flush with the reference surface (P), the positioning rib (19a) and the flat section (21) being provided on the opposite sides of a reference line (L1) passing through the center (01) of the drain hose insertion hole (14) and through the center (02) of the screw passage hole (16).

## Description

### Technical Field

The present invention relates to a drain hose fastener that fastens a drain hose and an indoor unit for an air conditioning device including the drain hose fastener.

### Background Art

A drain pan that collects drain water condensed by a heat exchanger at the time of cooling is provided in an indoor unit for an air conditioning device. A drain hose for discharging the drain water to the outside is connected to the drain pan. When fastening the drain hose to an inlet of the drain pan, a drain hose fastener is used (PTL 1).

### Citation List

### Patent Literature

[PTL 1] Japanese Unexamined Patent Application Publication No. 2011-149616

### Summary of Invention

### Technical Problem

A hole portion for a drain hose to which a drain hose is inserted is formed in the drain hose fastener. The drain hose is inserted to the hole portion for a drain hose, the drain hose is fitted to the inlet of the drain pan, and the drain hose fastener is screwed to a screw boss provided in the drain pan. Thus, the drain hose is fastened to the drain pan. When fastening the drain hose as described above, it is necessary to position the drain hose fastener with respect to the screw boss by rotating the drain hose fastener about the drain hose in a state where the drain hose is inserted to the hole portion for a drain hose. However, accurately positioning the drain hose fastener with respect to the screw boss is accompanied by difficulties since the accurate positioning requires work of screwing the drain hose.

The present invention is devised in view of such circumstances, and an object thereof is to provide a drain hose fastener and an indoor unit for an air conditioning device, in which positioning and fastening are possible with a simple operation.

### Solution to Problem

To solve the problems, the drain hose fastener and the indoor unit for an air conditioning device of the present invention adopt the following means.

That is, according to an aspect of the present invention, there is provided a drain hose fastener that fastens a drain hose inserted to a drain hose inlet provided in a drain pan which receives water dropping from a heat exchanger of an air conditioning device. The drain hose fastener includes a main body portion in which a hole portion for a drain hose, to which the drain hose is to be inserted, is formed and a fastening portion which is connected to the main body portion and in which a hole portion for fastening means that allows fastening means fastening the drain hose fastener to a drain pan side fastening portion of the drain pan to pass therethrough is formed. A rib that is erected from a reference surface and a flat portion that has substantially the same height as the reference surface are provided in the fastening portion with a reference line passing through a center of the hole portion for a drain hose and a center of the hole portion for fastening means interposed therebetween.

The drain hose fastener is fastened to the drain pan by being fastened to the drain pan side fastening portion through the fastening means (for example, a screw) from the hole portion for fastening means after the drain hose is inserted to the hole portion for a drain hose. When fastening the drain hose fastener, the drain hose fastener is rotated about the center of the hole portion for a drain hose in a state where the drain hose is inserted to the hole portion for a drain hose, and the hole portion for fastening means is moved to the drain pan side fastening portion. At this time, the flat portion provided on one side of the reference line passing through the center of the hole portion for a drain hose and the center of hole portion for fastening means is passed, and the hole portion for fastening means is moved to the drain pan side fastening portion. Then, the rib erected on the reference surface abuts against a boss for fastening means, which is the drain pan side fastening portion. Accordingly, the position of the hole portion for fastening means can be easily determined with respect to the drain pan side fastening portion, and thereby workability improves.

In the drain hose fastener according to the aspect of the present invention, the rib is provided on a periphery of the main body portion and a periphery of the fastening portion, and is notched at the flat portion.

Since the rib is provided on the periphery of the main body portion and the periphery of the fastening portion, the strength of the drain hose fastener can be enhanced. However, the rib is notched at a position corresponding to the flat portion, and thus the boss for fastening means, which is the drain pan side fastening portion, can pass therethrough.

According to another aspect of the present invention, there is provided an indoor unit for an air conditioning device including the drain hose fastener according to any one of the aspects described above, a drain hose to be inserted to the hole portion for a drain hose of the drain hose fastener, and a drain pan in which a drain hose inlet, to which the drain hose is to be inserted, and a boss for fastening means, to which fastening means passing through the hole portion for fastening means is fastened, are provided.

The drain hose can be easily fastened to the drain pan of the indoor unit by using the drain hose fastener. Advantageous Effects of Invention

Since the flat portion that allows the boss for fastening means to pass therethrough and the rib that abuts against the boss for fastening means are provided, the drain hose fastener can be positioned and fastened with a simple operation. Thus, workability improves.

### Brief Description of Drawings

Fig. 1 is a perspective view illustrating an indoor unit for an air conditioning device according to an embodiment of the present invention.
Fig. 2 is a partially enlarged view of a drain pan, which illustrates a vicinity of a drain socket where a clip is used.
Fig. 3 is a perspective view illustrating a state where a drain hose is inserted to the clip.
Fig. 4 is a plan view of the clip seen from a rib side.

### Description of Embodiments

Hereinafter, an embodiment according to the present invention will be described with reference to the drawings.

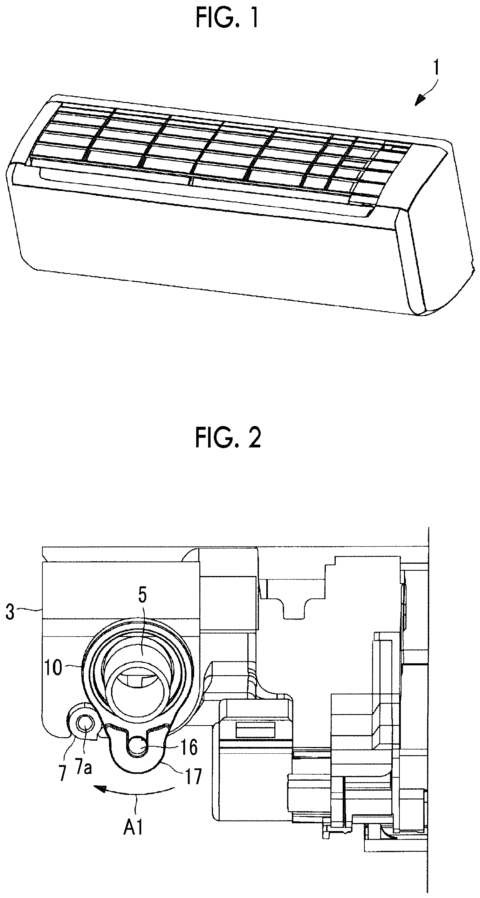

Fig. 1 illustrates an appearance of an indoor unit 1 for an air conditioning device. The indoor unit 1 is a wall-hanging type, sucks indoor air from above, and blows air after air conditioning indoors from below. The indoor unit 1 is connected to an outdoor unit (not illustrated), receives supply of a refrigerant compressed by the outdoor unit, and adjusts indoor air so as to have a predetermined temperature by means of an indoor heat exchanger provided inside the indoor unit 1.

Fig. 2 is a partially enlarged view of a drain pan 3 provided in the indoor unit 1. The drain pan 3 is provided on a lower side of the indoor unit 1 such that drain water condensed by the indoor heat exchanger is led thereto. A drain socket (drain hose inlet) 5 for discharging the drain water led to the drain pan 3 to the outside is provided in the drain pan 3. The drain socket 5 has a cylindrical shape, and is provided to protrude from a main body portion of the drain pan 3.

A screw boss (boss for fastening means) 7, which is a drain pan side fastening portion, is provided on the side of the drain socket 5. The screw boss 7 has a cylindrical shape having a diameter smaller than the drain socket 5, and is provided to protrude from this end portion of the drain pan 3. A screw hole 7a is formed in the middle of the screw boss 7. A screw for screwing a clip (drain hose fastener) 10, which is for fastening a drain hose to the drain socket 5, is inserted to the screw hole 7a.

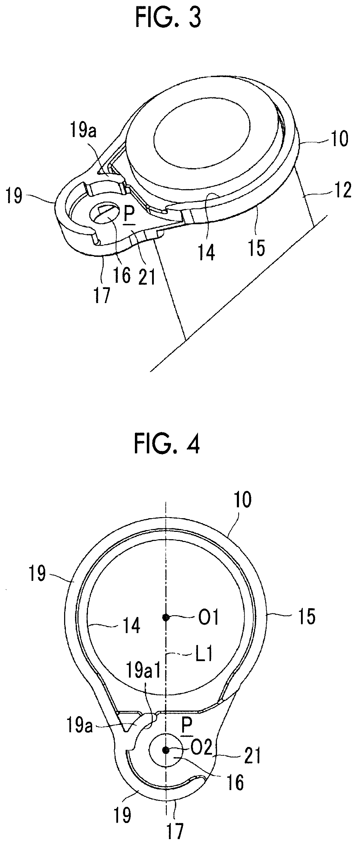

The clip 10 is used in a state where a tip of the drain hose 12 is inserted as illustrated in Fig. 3. In this state, the tip of the drain hose 12 is fitted to the drain socket 5 illustrated in Fig. 2, and then the clip 10 is attached by rotating in an arrow A1 direction.

As illustrated in Fig. 4, the clip 10 is made of a resin, and has a main body portion 15 in which a hole portion for a drain hose 14, to which the drain hose 12 is inserted, is formed and a fastening portion 17 which is connected to the main body portion 15 and in which a hole portion for a screw 16 is formed.

An appearance of the main body portion 15 is a substantially circular shape in a case of plan view as in Fig. 4. The hole portion for a drain hose 14 that has a center O1, which is common to the substantially circular appearance of the main body portion, is formed. The hole portion for a drain hose 14 has a slightly smaller diameter than an outer diameter of the drain hose 12, and the drain hose 12 is fitted thereto in a state of being pressed in. A rib 19 that is erected in a thickness direction (direction perpendicular to the page of Fig. 4) is provided along the entire outer peripheral edge of the main body portion 15.

The fastening portion 17 is integrally formed to be continuous from the main body portion 15 and is formed to protrude to an outer side in a radial direction of the substantially circular main body portion 15. Therefore, the clip 10 formed with the main body portion 15 and the fastening portion 17 has a teardrop shape of which a part bulges out in a case of plan view as in Fig. 4.

The hole portion for a screw 16 formed in the fastening portion 17 is a circle of which a center is a center 02, is a through-hole for inserting the screw used when screwing the clip 10 to the screw boss 7 of the drain pan (refer to Fig. 2), and has a slightly larger outer diameter than the screw.

The rib 19 is provided on the periphery of the fastening portion 17. The rib 19 is formed to be continuous from the rib 19 provided on the main body portion 15. A flat portion 21, in which the rib 19 is not provided, is provided on one side of the fastening portion 17. The flat portion 21 is continuous from a flat plate-shaped flat surface (reference surface) P of the fastening portion 17, and has the same height as the flat surface P.

A positioning rib 19a connected to the rib 19 is provided on the fastening portion 17. The positioning rib 19a has an inner circumferential surface 19a1 having curvature corresponding to that of a side surface shape of the screw boss 7 (refer to Fig. 2). A position of the hole portion for a screw 16 with respect to the screw boss 7 is accurately determined by a side surface of the screw boss 7 abutting against the inner circumferential surface 19a1. The positioning rib 19a may be provided independently without being connected to the rib 19.

The positioning rib 19a and the flat portion 21 are respectively provided on both sides of a reference line L1 passing through the center O1 of the hole portion for a drain hose 14 and the center 02 of the hole portion for a screw 16. Accordingly, when rotating the clip 10 about the drain hose 12, the screw boss 7 passes through the flat portion 21, and then the screw boss 7 abuts against the positioning rib 19a.

Next, a fastening method for the drain hose 12, in which the aforementioned clip 10 is used, will be described.

First, as illustrated in Fig. 3, the tip of the drain hose 12 is inserted into the hole portion for a drain hose 14 of the clip 10 such that the rib 19 of the clip 10 faces the tip of the drain hose 12 (the rib 19 faces an upper side in Fig. 3).

Then, the tip of the drain hose 12, along with the clip 10, is inserted to the drain socket 5 illustrated in Fig. 2. At this time, an inner circumference of the drain hose 12 and an outer circumference of the drain socket 5 are in close contact with each other.

Next, the clip 10 is rotated in the arrow A1 direction of Fig. 2, that is, about a center of the drain hose 12. At this time, the drain hose 12 remains substantially stationary with respect to the drain socket 5, and the clip 10 is displaced with respect to the drain hose 12.

When the fastening portion 17 of the clip 10 rotates in the arrow A1 direction, first, the flat portion 21 of the fastening portion 17 (refer to Fig. 4) passes through the upper side of the screw boss 7. After then, the inner circumferential surface 19a1 of the positioning rib 19a abuts against the side surface of the screw boss 7. Accordingly, the clip 10 is positioned with respect to the screw boss 7. Then, a screw is screwed by passing the screw through the screw hole 7a of the screw boss 7 from the hole portion for a screw 16 of the fastening portion 17, and thereby the clip 10 is fastened to the screw boss 7.

As described above, the following operational effects are achieved in the embodiment.

When fastening the clip 10, the clip 10 is rotated about the center O1 of the hole portion for a drain hose 14 in a state where the drain hose 12 is inserted to the hole portion for a drain hose 14, and the hole portion for a screw 16 is moved to the screw boss 7. At this time, the flat portion 21 provided on one side of the reference line L1 passing through the center O1 of the hole portion for a drain hose 14 and the center 02 of the hole portion for a screw 16 is passed, and the hole portion for a screw 16 is moved to the screw boss 7. Then, the positioning rib 19a abuts against the screw boss 7. Accordingly, the position of the hole portion for a screw 16 with respect to the screw hole 7a of the screw boss 7 can be easily determined, and thereby workability improves.

Since the rib 19 is provided on the periphery of the main body portion 15 and the periphery of the fastening portion 17, the strength of the clip 10 can be enhanced.

### Reference Signs List

1: indoor unit
3: drain pan
5: drain socket (drain hose inlet)
7: screw boss (boss for fastening means)
7a: screw hole
10: clip (drain hose fastener)
12: drain hose
14: hole portion for drain hose
15: main body portion
16: hole portion for screw (hole portion for fastening means)
17: fastening portion
19: rib
19a: positioning rib
19a1: inner circumferential surface
21: flat portion
01: center (of hole portion for drain hose)
02: center (of hole portion for screw)
P: flat surface (reference surface)

## Claims

1. A drain hose fastener that fastens a drain hose inserted to a drain hose inlet provided in a drain pan which receives water dropping from a heat exchanger of an air conditioning device, the drain hose fastener comprising:
a main body portion in which a hole portion for a drain hose, to which the drain hose is to be inserted, is formed; and
a fastening portion which is connected to the main body portion and in which a hole portion for fastening means that allows fastening means fastening the drain hose fastener to a drain pan side fastening portion of the drain pan to pass therethrough is formed,
wherein a rib that is erected from a reference surface and a flat portion that has substantially the same height as the reference surface are provided in the fastening portion with a reference line passing through a center of the hole portion for a drain hose and a center of the hole portion for fastening means interposed therebetween.

2. The drain hose fastener according to Claim 1,
wherein the rib is provided on a periphery of the main body portion and a periphery of the fastening portion, and is notched at the flat portion.

3. An indoor unit for an air conditioning device comprising:
the drain hose fastener according to Claim 1 or 2;
a drain hose to be inserted to the hole portion for a drain hose of the drain hose fastener; and
a drain pan in which a drain hose inlet, to which the drain hose is to be inserted, and a boss for fastening means, to which fastening means passing through the hole portion for fastening means is fastened, are provided.
